# EUROPEAN PATENT APPLICATION

(11) **EP 4 679 299 A1**
(43) Date of publication of application: **14.01.2026**
(21) Application number: 25188501.8
(22) Date of filing: 09.07.2025
(51) Int. Cl.: G06F 18/2413, G06F 18/2431, G06V 10/74, G06V 10/80, G06V 20/40, G06V 20/52

(54) **OBJECT AND ACTION RECOGNITION VIA TEXT-BASED CLASSIFICATION MODELS**

(30) Priority: 09.07.2024 US 202463668993 P; 07.07.2025 US 202519261352
(71) Applicant: Tyco Fire & Security GmbH, 8212 Neuhausen am Rheinfall (CH)
(72) Inventor: ROZNER, Amit, Yehud (IL); LEVY, Ran, Rishon Lezion (IL); FALIK, Yohay, Petah Tiqwa (IL)
(74) Representative: Meissner Bolte Nürnberg

(57) **Abstract**

Example implementations include a method, apparatus and computer-readable medium of object/action recognition using a text-based classification model, comprising generating an image vector configured to represent one or more features of the first image. Additionally, the implementations further include computing a vector distance between the image vector and each of a first text vector and a second text vector, wherein the first text vector is configured to represent a first text, and wherein the second text vector is configured to represent a second text. Additionally, the implementations further include classifying the first image according to the first text or the second text based on which computed vector distance indicates a highest similarity between the image vector and either the first text vector or the second text vector relative to the other of the first text vector or the second text vector.

## Description

### CROSS REFERENCE TO RELATED APPLICATIONS

The present application for patent claims the benefit of U.S. Paten Application No. 19/261,352, entitled "OBJECT AND ACTION RECOGNITION VIA TEXT-BASED CLASSIFICATION MODELS," filed July 7, 2025, and U.S. Provisional Application No. 63/668,993, entitled "OBJECT AND ACTION RECOGNITION VIA TEXT-BASED CLASSIFICATION MODELS," filed July 9, 2024, which is assigned to the assignee hereof and expressly incorporated herein by reference in their entirety.

### BACKGROUND

The present disclosure relates to object and/or action recognition in video or images, and specifically, to classification of a detected object or action based on a relative vector distance process.

Many areas, such as areas within or outside of a building, have cameras deployed for various purposes, such as providing video data for playback to one or more devices in an enterprise network. This can allow security personnel to surveil an area using a computer or other device connected to the enterprise network to receive the video data. In other examples, the video data can be used by automated systems to identify people occupying an area, detect activities or incidents occurring in the area, trigger security notifications based on the identification and/or activities, etc.

Conventional approaches for object and action recognition often rely on comparing textual descriptions and visual data using cosine similarity. Here, the cosine similarity between a textual description and an image satisfies a threshold condition, then an object or action may be determined to be present in the visual data. However, this method suffers from low accuracy due to the inherent differences between text and visual representations. One approach to mitigate this issue would be to acquire and annotate a dataset, then fine tune an associated large language model (LLM). However, this approach is infeasible in many cases due to high costs of data gathering, annotation, and training the LLM.

### SUMMARY

The following presents a simplified summary of one or more aspects in order to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects in a simplified form as a prelude to the more detailed description that is presented later. Embodiments according to the invention are in particular claimed in the appended claims.

An example aspect includes a method of object recognition using text-based classification model, comprising receiving one or more images from one or more image sensors, wherein the one or more images comprises a first image. The method further includes generating an image vector configured to represent one or more features of the first image. Additionally, the method further includes computing a cosine similarity between the image vector and each of a first text vector and a second text vector, wherein the first text vector is configured to represent a first text, and wherein the second text vector is configured to represent a second text. Additionally, the method further includes classifying the first image according to the first text or the second text based on which computed cosine similarity indicates a highest similarity between the image vector and either the first text vector or the second text vector relative to the other of the first text vector or the second text vector.

Another example aspect includes an apparatus for object recognition using text-based classification model, comprising one or more memories and one or more processors coupled with one or more memories and configured to perform, individually or in any combination, the follow actions. The one or more processors are configured to receive one or more images from one or more image sensors, wherein the one or more images comprises a first image. The one or more processors are further configured to generate an image vector configured to represent one or more features of the first image. Additionally, the one or more processors are further configured to compute a cosine similarity between the image vector and each of a first text vector and a second text vector, wherein the first text vector is configured to represent a first text, and wherein the second text vector is configured to represent a second text. Additionally, the one or more processors are further configured to classify the first image according to the first text or the second text based on which computed cosine similarity indicates a highest similarity between the image vector and either the first text vector or the second text vector relative to the other of the first text vector or the second text vector.

Another example aspect includes an apparatus for object recognition using text-based classification model, comprising means for receiving one or more images from one or more image sensors, wherein the one or more images comprises a first image. The apparatus further includes means for generating an image vector configured to represent one or more features of the first image. Additionally, the apparatus further includes means for computing a cosine similarity between the image vector and each of a first text vector and a second text vector, wherein the first text vector is configured to represent a first text, and wherein the second text vector is configured to represent a second text. Additionally, the apparatus further includes means for classifying the first image according to the first text or the second text based on which computed cosine similarity indicates a highest similarity between the image vector and either the first text vector or the second text vector relative to the other of the first text vector or the second text vector.

Another example aspect includes a computer-readable medium having instructions stored thereon of object recognition using text-based classification model, wherein the instructions are executable by one or more processors, individually or in any combination, to receive one or more images from one or more image sensors, wherein the one or more images comprises a first image. The instructions are further executable to generate an image vector configured to represent one or more features of the first image. Additionally, the instructions are further executable to compute a cosine similarity between the image vector and each of a first text vector and a second text vector, wherein the first text vector is configured to represent a first text, and wherein the second text vector is configured to represent a second text. Additionally, the instructions are further executable to classify the first image according to the first text or the second text based on which computed cosine similarity indicates a highest similarity between the image vector and either the first text vector or the second text vector relative to the other of the first text vector or the second text vector.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a schematic block diagram illustrating an example video surveillance system, in accordance with aspects described herein.
FIG. 2 is a schematic block diagram illustrating an example of a threshold vector distance system based on a text-based classification model combined with image data, in accordance with aspects described herein.
FIG. 3 is a block diagram illustrating an example of a vector distance computation, in accordance with aspects described herein.
FIG. 4 is a schematic block diagram illustrating an example of a relative vector distance system based on a text-based classification model combined with image data, in accordance with aspects described herein.
FIG. 5 is a block diagram illustrating an example of a computer device having components configured to perform a method of object recognition using a text-based classification model.
FIG. 6 is a flowchart illustrating an example of a method of object recognition using a text-based classification model.
FIG. 7 is a flowchart illustrating additional aspects of the method of FIG. 6.
FIG. 8 is a flowchart illustrating additional aspects of the method of FIG. 6.
FIG. 9 is a flowchart illustrating additional aspects of the method of FIG. 6
FIG. 10 is a flowchart illustrating additional aspects of the method of FIG. 6.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Aspects of the disclosure are directed to techniques for object and/or action detection or recognition using a text-based classification model (e.g., a large language model (LLMs) or any other suitable model). Text-based classification models are a type of machine learning model typically used for processing and generating text. For example, a text-based classification model may use natural language processing (NLP) to categorize, label, or annotate pieces of text based on their content. This can include identifying the sentiment of a piece of text, classifying emails as spam or not spam, or tagging news articles by topic.

In certain aspects, a text-based classification model may be combined with image data. Such a combination may provide an approach to artificial intelligence (AI) and machine learning that allows for the extraction of meaningful information from both text and image content, leading to more robust and comprehensive models. As discussed, text-based classification models may be configured to categorize or label pieces of text based on learned patterns. For example, such a model might be trained to identify whether a given piece of text is expressing positive or negative sentiment. As used herein, "image data" or "image content" may relate to images, videos, and/or other visual content. AI models can be trained to recognize objects, faces, scenes, and even emotions in image data. This is typically done using convolutional neural networks (CNNs), a type of deep learning model for processing images.

By combining these two types of data and models, the resulting AI system may operate with both text and image content. For example, the system may be trained to analyze at an image and generate a descriptive caption; a process that combines image recognition (image data) with text generation (text-based model). The conventional approach for object and action recognition often involves computing embeddings, or mathematical representations, for both textual descriptions and image data. These embeddings are then compared using vector distance computation. Vector distance computation, as used herein, may include any suitable vector distance measurement, including: Euclidian distance (e.g., L2 norm), Manhattan distance (e.g., L1 norm), Ln or L infinity norm, Minkowski distance, Cosine distance/similarity, Hamming distance, etc. A threshold is set, and if the similarity between the embeddings surpasses that threshold, the system determines that the object or action described by the text is present in the image data.

However, one of the main issues this conventional approach is the inherent disconnect between text and visual representations. Textual and image data are fundamentally different, and a model trained to process one may not necessarily excel at processing the other. Furthermore, LLMs are not originally designed to be used as classification models, which can lead to lower accuracy when they are used as such. To address this issue, a user may collect a dataset, annotate it, and fine-tune the LLM on the dataset. However, this approach may be infeasible due to financial costs and the high amount of time required to perform data gathering, annotating, and training.

Another issue arises from dissimilar vector distances across different image data and text. For example, a typical cosine similarity between a hyperplane location of the word "apple" and a hyperplane location of a visual representation of an apple may fall within a first range, while a typical cosine similarity between a hyperplane location of the word "bicycle" and a hyperplane location of a visual representation of a bicycle may fall within a second range that is greater than the first range. In other words, vector distances associated with different words and image data may vary significantly. As such, a system that relies on a single vector distance threshold to classify an image or text may encounter problems with its classification function.

Thus, aspects of the disclosure are directed to using a "relative" vector distance process to classify an image or text by comparing multiple classes of text (e.g., all of the same category) to an image, and selecting the text having a corresponding vector with the smallest distance to a vector associated with the image relative to the other classes of text, as opposed to the conventional vector distance threshold. By using relative vector distance, there is no need for the user to collect and annotate a new dataset or fine-tune the LLM on the new dataset. Moreover, by comparing multiple classes of text to the image, varying ranges of vector distance no longer pose a problem, but rather aid in the relative-based selection of the correct class of text.

Turning now to the figures, example aspects are depicted with reference to one or more modules or components described herein, where modules or components in dashed lines may be optional.

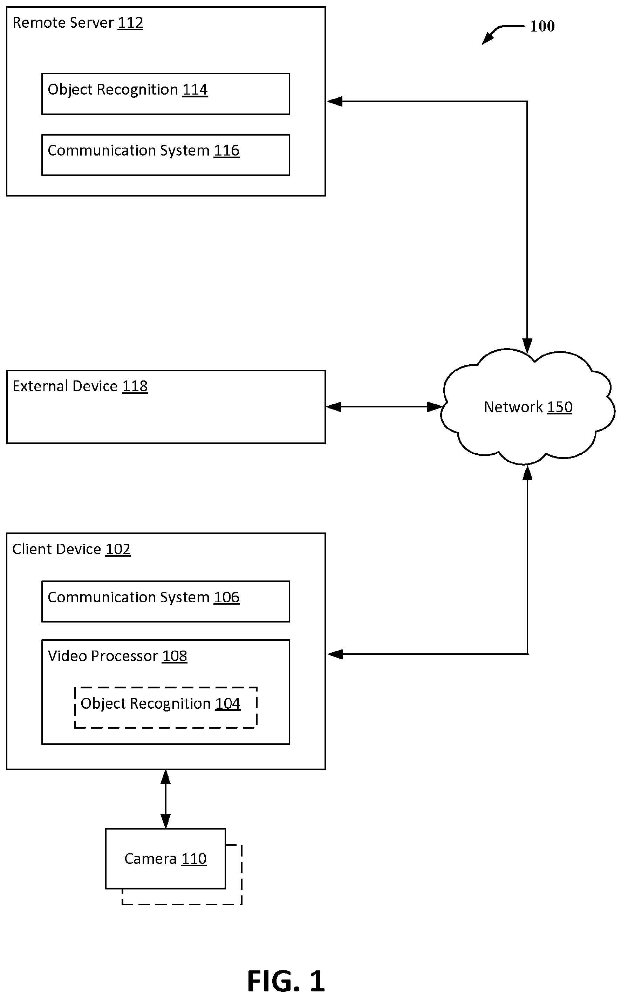

FIG. 1 is a schematic block diagram illustrating an example video surveillance system 100. The system 100 includes one or more cameras 110 or other image sensors, a client device 102, an external device 118, and a remote server 112. It should be noted that in some examples, the remote server 112 is an optional aspect of the system 100.

The one or more cameras 110 may include, but are not limited to: image sensors, cameras, thermal sensors, motion sensors, and the like. The cameras 110 may be positioned in different parts of an indoor/outdoor area, such as an area associated with a retail store, a venue, a school, a hospital, a commercial or private building, a data center, and the like. The client device 102 may be configured to receive image data (e.g., video frames) from the one or more cameras 110. As used herein, the term "image sensor" includes, but is not limited to, semiconductor charge-coupled devices (CCDs) or active pixel sensors in complementary metal-oxide-semiconductor (CMOS) or N-Type metal-oxide-semiconductor (NMOS) technologies, all of which are germane in a variety of applications including: digital cameras, hand-held or laptop devices, and mobile devices (e.g., phones, smart phones, personal data assistants (PDAs), personal computers (PCs), mobile internet devices (MIDs), user equipment (UE), etc.).

The client device 102 may form a local part of the system. That is, the client device 102 may be communicatively coupled to the one or more cameras via a wired interface and may be in the same area or region as the cameras 110. For example, the client device 102 may be implemented as a server or any other suitable computing device and may include a computer-readable medium configured to store image data captured by the one or more cameras 110 and software instructions or code for executing the functions described herein. The computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, flash memory, combinations of the aforementioned types of computer-readable media, or any other medium that can be used to store computer executable code in the form of instructions or data structures that can be accessed by a computer.

The client device 102 may include a video processor 108, a communication system 106, and an object recognition module 104. The video processor 108 may enable processing of image data received from the one or more cameras 110. For example, the video processor 108 may include a video/image encoder function configured to process raw video/image data received from the one or more cameras 110 and transform the raw data into a multi-dimensional vector representing features and patterns of the video/image data. In some examples, the video processor 108 is configured to process the image data via a series of convolutional layers (e.g., in the case of a CNN), where each layer is configured to recognize patterns of varying complexity in the data. The vector may be used as an input of the object recognition module 104 for object detection and/or classification.

The object recognition module 104 may be configured to detect and classify an object or action shown in image data received from the one or more cameras 110. In some examples, the object recognition module 104 may include a relative vector distance classifier. As such, the object recognition module 104 may be configured to classify an image by comparing multiple classes of text (e.g., all of the same category) to an image, and selecting the text associated with a text vector that has the smallest vector distance relative to text vectors associated with other classes and/or categories of text.

The communication system 106 of the client device 102 may be configured to communicate (e.g., transmit image data and receive other data) with external devices (e.g., external device 118 and/or remote server 112) via a network 150. The network 150 may include a wireless and/or wired personal area network (PAN), local area network (LAN), wide area network (WAN), metropolitan area network (MAN), cellular network, the Internet, or any combination thereof.

In some examples, the object recognition module 104 may perform action/object recognition using one or more vectors generated by the video processor 108 from image data received from the cameras 110. The object recognition module 104 may compare multiple text vectors (each associated with a different text) with an image data vector to determine which one of the multiple text vectors has a highest similarity score with the image data vector (e.g., which of the multiple text vectors is closer to the image data vector in a hyperplane).

If the determined text vector is associated with a user-configurable class of text that describes a certain action or object, the object recognition module 104 may trigger the client device 102 to communicate an alert, or trigger an alarm, via the network 150. For example, the client device 102 may push a notification to the external device 118 (e.g., if the external device is implemented as a user equipment (UE), such as a computer, cell phone, tablet, etc.) to notify security personnel. In some examples, the external device 118 may be implemented as an intercom system, whereby the client device 102 may cause the intercom system to produce an audible alert. In another example, the external device 118 may be part of a municipal or governmental system associated with a police department, fire department, hospital, and/or any other organization. In this example, the client device 102 may transmit signaling configured to alert proper authorities that the certain action or object has been detected by the object recognition module 104.

In certain aspects, the client device 102 may not be configured with an object recognition module 104. For example, the client device 102 may instead be configured to transmit image data collected from the one or more cameras 110 to the remote server 112 which includes an object recognition module 114. The object recognition module 114 of the remote server 112 may be configured to perform the same functions as the object recognition module 104 of the client device 102 described above. In this example, the remote server 112 may detect and classify an object or action shown in image data received from the client device 102, and it may communicate the results to one or more of the external device 118 and/or the client device 102. For example, the remote server 112 may communicate an alert, or trigger an alarm, via the network 150. The remote server 112 may include a communication system 116 configured to provide a means for wired and/or wireless communication via the network 150.

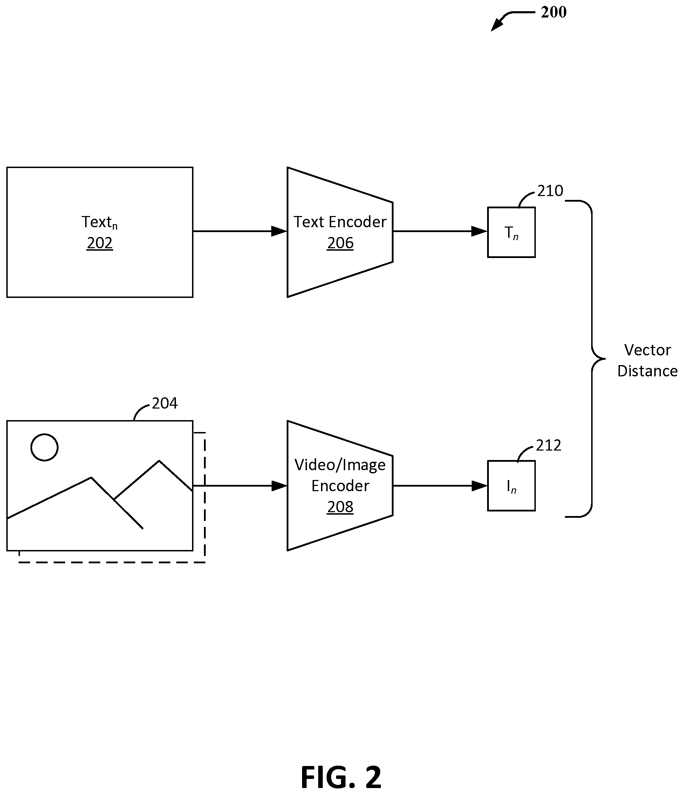

FIG. 2 is a schematic block diagram illustrating an example of a threshold vector distance system 200 based on a text-based classification model combined with image data. The system 200 may be trained to analyze one or more images 204 and determine a relevant textual caption or description.

The system 200 may include text encoder 206 and a video/image encoder 208, each configured to generate multi-dimensional vector representations of text and video/images, respectively. The various functions of the system 200 may be performed by a combination of the video processor 108 and the object recognition module (104/114).

The video/image encoder 208 may be configured to process image data 204 and transform it into a smaller, more compact, high-dimensional image vector 212, often referred to as an "embedding." The video/image encoder 208 may be configured to generate the image vector 212 such that it captures the essential features and/or patterns of the image data 204. Accordingly, the image vector 212 may provide information needed to perform other functions, such as object or action detection.

As used herein, an image vector relates to a mathematical representation of an image where each pixel's attributes (e.g., color and intensity), are encoded as numerical values. These values are organized into a one-dimensional array, called a vector, which captures the essential features of the image. This vectorization process is performed to put the images into a format that can easily be processed and analyzed using mathematical and computational techniques.

In the context of hyperplanes, an image vector may relate to a point in a high-dimensional space (e.g., n-dimensional space), where each dimension corresponds to a feature of the image. A hyperplane, in this space, may be configured as a decision boundary that separates different classes of images based on their corresponding features. For instance, in a classification task, a hyperplane may be used to distinguish between images of cats and dogs by finding the optimal boundary that minimizes classification errors.

Similarly, a text encoder 206 (e.g., in text-based large language models) may be configured to convert input text data 202 into a numerical representation or text vector 210 that can be understood and processed by a machine learning model. The conversion process of text encoding may include translation of words, sentences, or entire documents into numerical values or vectors. In the illustrated example, the system may classify an image (e.g., associate a text vector with an image vector) based on a threshold vector distance calculated between the two vectors.

A text-based classification model combined with image data may be used to determine how similar a text vector is to an image vector. More specifically, a distance may be computed between two vectors (e.g., the image vector 212 and the text vector 210) to assess how similar the two vectors are. The closer the text vector 210 is to the image vector 212 in a hyperplane, the higher the similarity between the associated text and image. Thus, in a threshold vector distance model, if a vector distance satisfies a threshold condition (e.g., the distance between the image vector 212 and the text vector 210 is less than or equal to a threshold value), then the system 200 may determine that the text vector 210 is associated with the image vector 212, and the image corresponding to the image vector 212 may be classified according to the text associated with the text vector 210.

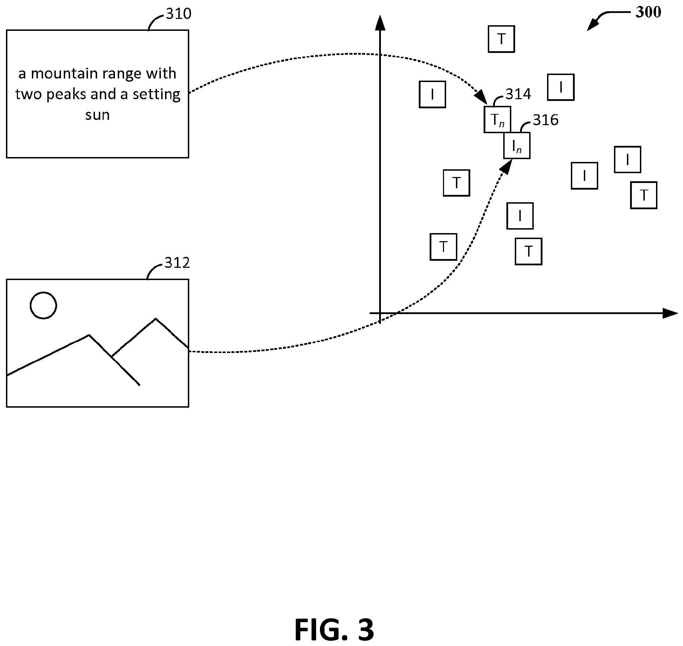

FIG. 3 is a block diagram illustrating an example of a vector distance computation. Here, a text block 310 with the language "a mountain range with two peaks and a setting sun" is associated with a text vector 314, and an image 312 of a mountain range with two peaks and a sun is associated with an image vector 316. Here, the text vector 314 and the image vector 316 may represent the text block 310 and the image 312, respectively, in a hyperplane 300. Although the text vector 314 and the image vector 316 are illustrated as being in a two-dimensional space, the vectors may be defined by more than two-dimensions (e.g., 512 dimensions).

In certain aspects, the hyperplane 300 may relate to a subspace defined as being one dimension less than a dimension of a data space. For example, in a two-dimensional space, a hyperplane is a line, and in a three-dimensional space, a hyperplane is a two-dimensional plane, and so on. Thus, each vector may represent a data point in an n-dimensional space, where n is the number of features associated with given data (e.g., an image or text). For example, a data point with three features [2, 3, 4] can be seen as a vector in three-dimensional space.

### Examples of Action/Object Recognition in Image Data based on Relative Vector Distance

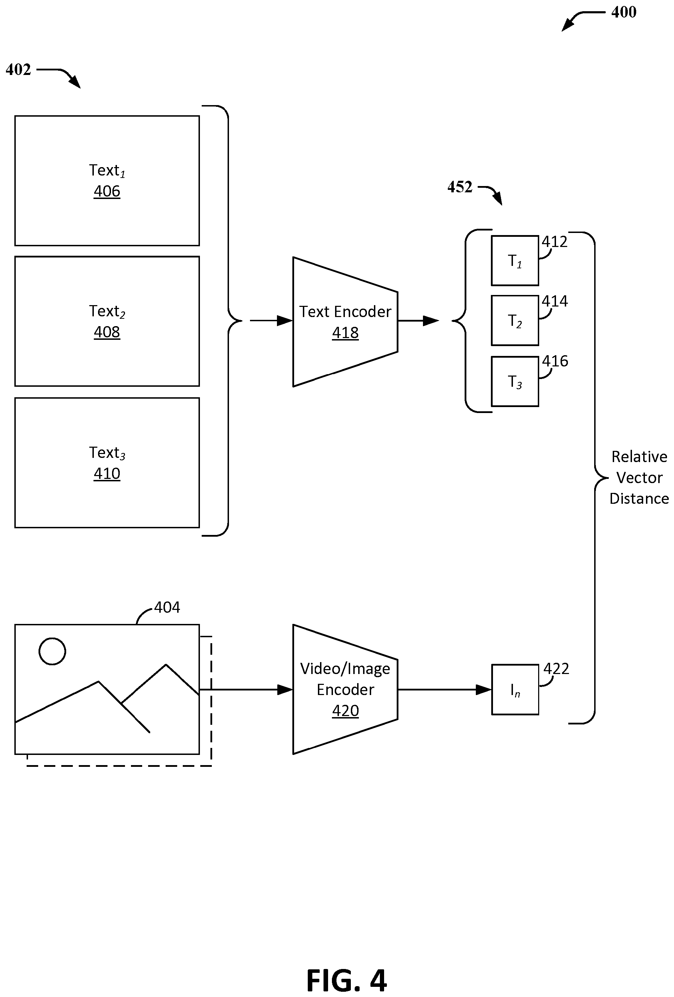

FIG. 4 is a schematic block diagram illustrating an example of a relative vector distance system 400 based on a text-based classification model combined with image data. The system 400 may be trained to analyze one or more images 404 and determine a relevant textual caption or description from a plurality of textual data 402. The various functions of the system 400 may be performed by a combination of the video processor 108 and the object recognition module (104/114). As illustrated, the plurality of textual data 402 includes a first block of text 406, a second block of text 408, and a third block of text 410. It should be noted that any suitable number of textual data or blocks greater than one may be used.

In certain aspects, each block of text in the plurality of textual data 402 may be a different class of textual data that are all part of the same category. For example, if the category is "fruit," then the first block of text 406 may be "apple," the second block of text 408 may be "plum," and the third block of text 410 may be "lemon." Thus, each block of text may describe or define a class of a particular category. Here, the text encoder 418 (e.g., text encoder 206 of FIG. 2) may be configured to generate a multi-dimensional vector (e.g., first vector 412, second vector 414, third vector 416 of a set of vectors 452 associated with the same category) representation for each block of text.

A video/image encoder 420 (e.g., video/image encoder 208 of FIG. 2) may be configured to generate multi-dimensional vector representations of video/images captured by a camera. Thus, relating back to FIG. 1, the client device 102 may receive image data (including the one or more images 404) from the one or more cameras 110. The video processor 108 may generate a multi-dimensional vector (e.g., fourth vector 422 of the one or more images 404) representations of the image data via the video/image encoder 420.

The object recognition module 104/114 may then use relative vector distance to determine a classifier for the image associated with the fourth vector 422 by comparing distances between the fourth vector 422 and each of the set of vectors 452 in a hyperplane to determine which distance is the smallest relative to the other distances. Thus, using the example above, the fourth vector 422 may be generated based on an image of an apple (e.g., one of the one or more images 404), the first vector 412 may be generated based on the first block of text 406 being "apple," the second vector 414 may be generated based on the second block of text 408 being "plum," and the third vector 416 may be generated based on the third block of text 410 being "lemon." The object recognition module 104/114 may determine that the fourth vector 422 is relatively closer to the first vector 412 compared to a distance of the fourth vector 422 to each of the second vector 414 and the third vector 416. In other words, the object recognition module 104/114 may classify the fourth vector 422 as an apple and determine that an apple has been detected in the image data based on vector distance between the fourth vector 422 and the first vector 412 being a shortest distance relative to the distances between the fourth vector 422 and each of the second vector 414 and the third vector 416.

As discussed above, vector distances may vary significantly among different text and image data, which may cause problems with image classification using a threshold vector distance process. These image classification problems may be eliminated or reduced using relative vector distance analysis, because instead of using a uniform threshold, text classification of an image may be determined based on a smallest or closest vector distance relative to other vector distances associated with other texts.

In certain aspects, a user may configure the category and classes used for the relative vector distance process performed by the object recognition module 104/114. For example, the user may operate a store and the system 400 may be implemented as part of a store security apparatus to determine if the one or more cameras 110 have captured a person who has fallen down within the store premises. In some examples, the user may select and configure the category, and the various classes within that category, that the object recognition module 104/114 may use to classify image data. The user configured category and classes may be referred to herein as target categories and target classes.

For example, the target category may be "human action," and target classes may include actions like falling down, running, fighting, etc. Accordingly, in some examples, the object recognition module 104 may be configured to determine whether image data received from one or more cameras is classified according to a user-configured classification or is not classified according to the user-configured classification. In such an example, the object recognition module 104 may refrain from classifying image data using any classification other than that which is configured by the user. Thus, the object recognition module 104 determines than an image data is classified according to a user-configured classification, then an alert or notification may be triggered by the module. If the image data is not classified according to the user-configured classification, the module may refrain from triggering the alert or notification.

In certain aspects, the plurality of textual data 402 may include multiple different texts associated with the same class of object or action being classified. For example, if the first block of text 406 is "dog," then the second block of text 408 may be "puppy," or "K9," "hound," or any other suitable synonym for dog. Accordingly, when the relative vector distance process is performed, the object recognition module 104 may compute: a first vector distance between the fourth vector 422 (e.g., the image vector associated with the one or more images 404) and the first vector 412 (e.g., the text vector associated with the first block of text 406), and a second vector distance between the fourth vector 422 and the second vector 414 (e.g., the text vector associated with the second block of text 408).

Moreover, in this example, the third block of text 410 may be "cat," which may result in the third block of text 410 being in a same category (e.g., "domesticated animal") as the first block of text 406 and the second block of text 408, but in a different class relative to the first block of text 406 and the second block of text 408. As such, the object recognition module 104 may determine a classification of the one or more images 404 from multiple different texts that fall within the same class of object and/or action, as well as one or more other texts that fall within different classes and/or categories of object(s) and/or action(s). As used herein, a "category" may relate to a group of objects and/or actions, wherein each object and/or action shares a characteristic (e.g., the category) with each of the other objects and/or actions.

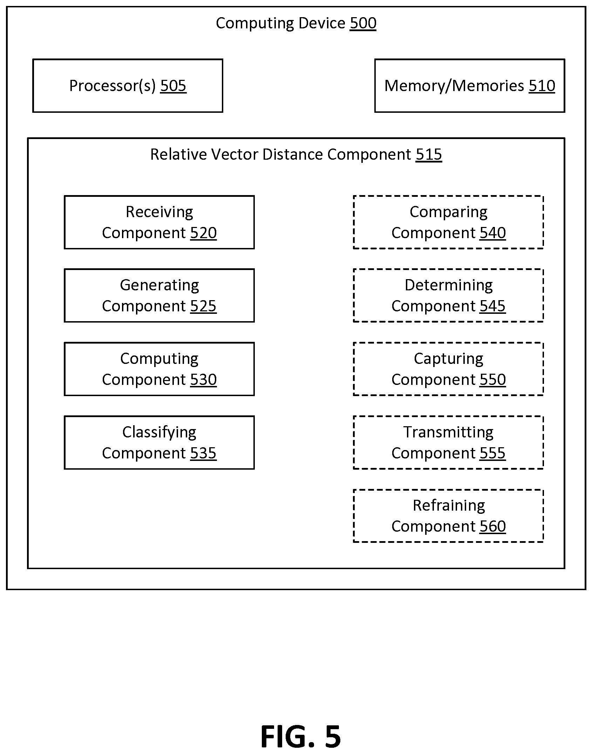

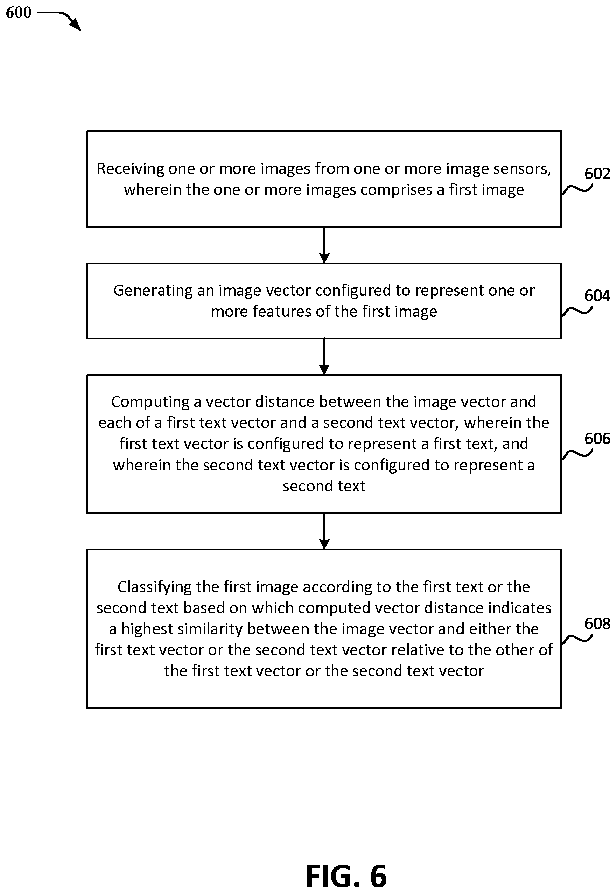

Referring to FIG. 5 and FIG. 6, in operation, computing device 500 may perform a method 600 of object recognition using a text-based classification model, such as via execution of relative vector distance component 515 by one or more processors 505 configured, individually or in any combination, to execute instructions to perform the following actions, and/or configured to communicate with one or more memories 510 to obtain the instructions to be executed.

At block 602, the method 600 includes receiving one or more images from one or more image sensors, wherein the one or more images comprises a first image. For example, in an aspect, computing device 500, one or more processors 505, one or more memories 510, relative vector distance component 515, and/or receiving component 520 may be configured to or may comprise means for receiving one or more images from one or more image sensors, wherein the one or more images comprises a first image.

For example, the receiving at block 602 may include receiving, by a client device (e.g., client device 102 of FIG. 1) via a wired interface or a LAN, or a remote server (e.g., remote server 112 of FIG. 1) via a network (e.g., network 150 of FIG. 1) image data from one or more cameras (e.g., one or more cameras 110 of FIG. 1). The image data may include raw image data that is processed by a video processor (e.g., video processor 108 of FIG. 1) to generate one or more image vectors.

Further, for example, the receiving at block 602 may be performed to provide a user with vectors generated from image data to determine in real time whether a particular action has occurred in view of the one or more cameras, or if a particular object has been captured by the one or more cameras. This provides the user with a rapid solution for situational awareness.

At block 604, the method 600 includes generating an image vector configured to represent one or more features of the first image. For example, in an aspect, computing device 500, one or more processors 505, one or more memories 510, relative vector distance component 515, and/or generating component 525 may be configured to or may comprise means for generating an image vector configured to represent one or more features of the first image.

For example, the generating at block 604 may include generating, by the video processor, one or more vectors associated with each video frame or image data received from the one or more cameras. In some examples, the video processor may input the image data through a convolutional neural network (CNN) or other similar model to identify different features in the image data, such as edges, textures, shapes, etc. After the image data has been passed through the CNN, the video processor may output one or more vectors associated with the image data that represent feature(s) of the image data.

Further, for example, the generating at block 604 may be performed in order to generate image vectors so that a machine learning process, such as an action or object detection or recognition algorithm (e.g., object recognition module 104/114) may classify an object or action depicted in the image data and notify the user if a particular object or action has been detected in the image data.

At block 606, the method 600 includes computing a vector distance between the image vector and each of a first text vector and a second text vector, wherein the first text vector is configured to represent a first text, and wherein the second text vector is configured to represent a second text. For example, in an aspect, computing device 500, one or more processors 505, one or more memories 510, relative vector distance component 515, and/or computing component 530 may be configured to or may comprise means for computing a vector distance between the image vector and each of a first text vector and a second text vector, wherein the first text vector is configured to represent a first text, and wherein the second text vector is configured to represent a second text.

For example, the computing at block 606 may include performing, by the object recognition module, an object or action recognition process using relative vector distance to determine multiple vector distances between an image vector and each of multiple text vectors, and compare the multiple vector distances to determine which text vector has a smallest distance to the image vector in a hyperplane relative to the other vector distances. Each text vector may represent a different class, and the class associated with each of the multiple text vectors may fall within the same category of objects or action.

Further, for example, the computing at block 606 may be performed to determine which, of multiple text vectors, is a best classifier of the image associated with the image vector. Here, the text vector having the smallest relative distance to the image vector may indicate such a classification.

At block 608, the method 600 includes classifying the first image according to the first text or the second text based on which computed vector distance indicates a highest similarity between the image vector and either the first text vector or the second text vector relative to the other of the first text vector or the second text vector. For example, in an aspect, computing device 500, one or more processors 505, one or more memories 510, relative vector distance component 515, and/or classifying component 535 may be configured to or may comprise means for classifying the first image according to the first text or the second text based on which computed vector distance indicates a highest similarity between the image vector and either the first text vector or the second text vector relative to the other of the first text vector or the second text vector.

For example, the classifying at block 608 may include, classifying, by the object recognition module, the image data associated with the image vector using the relative vector distance process. The object recognition module may output a class label associated with a particular one or more images or video frames (e.g., image data). In some examples, the client device may receive the classification as an input and, if the classification meets a criterion (e.g., the image data is classified as "person falling"), the client device may trigger an alarm or an alert at an external device (e.g., external device 118 of FIG. 1), described in more detail above.

Further, for example, the classifying at block 608 may be performed to alert the user and/or appropriate personnel that a particular action has been detected. This may provide a real-time alert to security and/or emergency personnel so that they can timely respond.

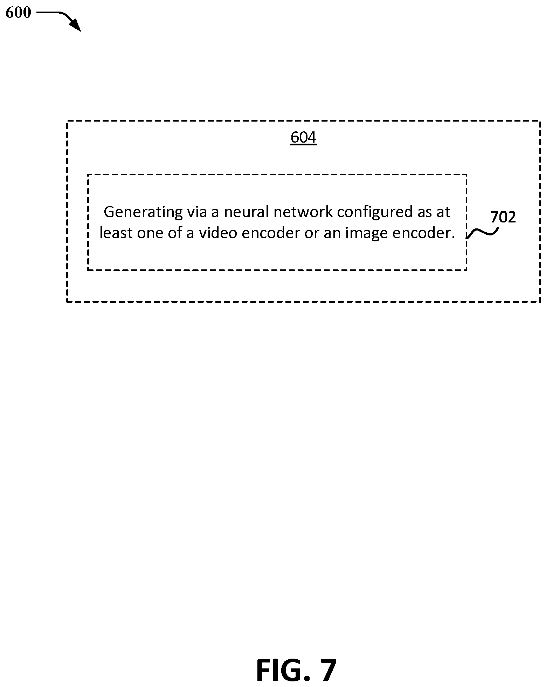

Referring to FIG. 7, in an alternative or additional aspect, at block 702, the generating at block 604 of the image vector comprises generating via a neural network configured as at least one of a video encoder or an image encoder.

For example, a video/image encoder (e.g., video/image encoder 208/420 of FIGs. 2 and 4) may generate one or more image vectors based on image data received from the one or more cameras. In some examples, the video processor may input image data through a CNN or other similar model to identify different features in the image data, such as edges, textures, shapes, etc. After the image data has been passed through the CNN, the video processor may output one or more vectors associated with the image data that represent feature(s) of the image data. The output image vectors may be saved at a remote server or a local storage (e.g., a local storage accessible by the client device).

In an alternative or additional aspect, the image vector is a multi-dimensional vector configured to represent features of the first image.

In an alternative or additional aspect, the first text is associated with a first action of a first action category, and wherein the second text is associated with a second action of the first action category. In this aspect, each of the first text and the second text correspond to a class of action within the first action category.

In an alternative or additional aspect, the first text is associated with a first action of a first action category, and wherein the second text is synonymous with the first text and associated with the first action of the first action category. For example, the first action category may be "human action" or something similar, and the first action and second actions may be the same class. For instance, the first action may be "sprinting," and the second action may be "dashing."

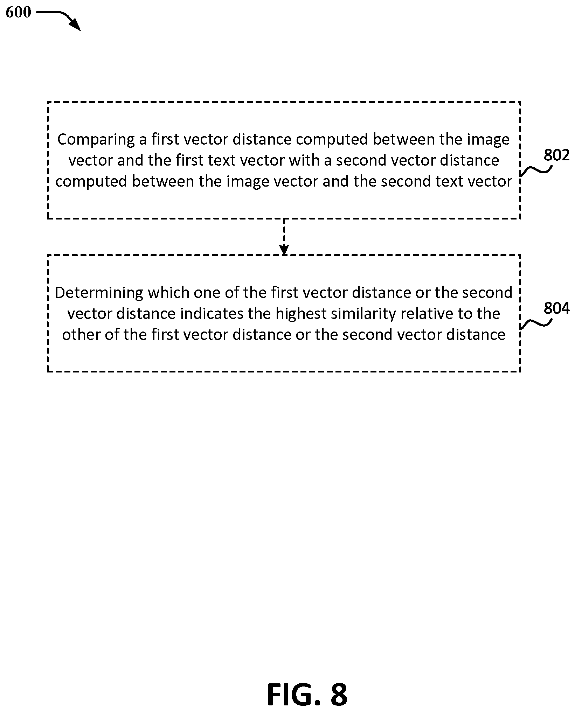

Referring to FIG. 8, in an alternative or additional aspect, at block 802, the method 600 may further include comparing a first vector distance computed between the image vector and the first text vector with a second vector distance computed between the image vector and the second text vector. For example, in an aspect, computing device 500, one or more processors 505, one or more memories 510, relative vector distance component 515, and/or comparing component 540 may be configured to or may comprise means for comparing a first vector distance computed between the image vector and the first text vector with a second vector distance computed between the image vector and the second text vector.

For example, the comparing at block 802 may include comparing a distance or a cosine of an angle between an image vector and each one of multiple text vectors. As illustrated in FIG. 3, the image associated with the image vector may be classified according to the text associated with whichever text vector has a smallest distance between it and the image vector.

Further, for example, the comparing at block 802 may be performed in order to determine a classification of the image associated with the image vector (e.g., the image from which the image vector was generated). By comparing the distance between the image vector and multiple text vectors, a classification of the image may be determined based on a relative distance instead of a fixed threshold value.

**In** this optional aspect, at block 804, the method 600 may further include determining which one of the first vector distance or the second vector distance indicates the highest similarity relative to the other of the first vector distance or the second vector distance. For example, in an aspect, computing device 500, one or more processors 505, one or more memories 510, relative vector distance component 515, and/or determining component 545 may be configured to or may comprise means for determining which one of the first vector distance or the second vector distance indicates the highest similarity relative to the other of the first vector distance or the second vector distance.

For example, the determining at block 804 may include determining which text vector has a highest similarity (e.g., smallest distance) between it and the image vector. Further, for example, the determining at block 804 may be performed as part of a relative vector distance process to determine a classification of an image.

In an alternative or additional aspect, each of the image vector, the first text vector, and the second text vector comprise respective multi-dimensional coordinates in a hyperplane.

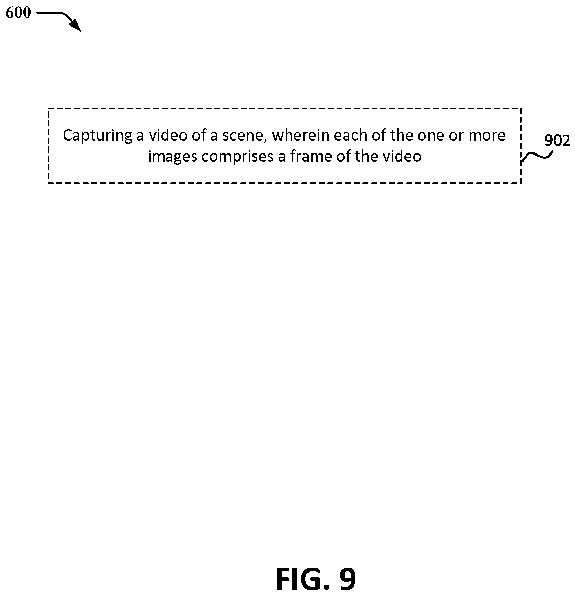

Referring to FIG. 9, in an alternative or additional aspect, at block 902, the method 600 may further include capturing a video of a scene, wherein each of the one or more images comprises a frame of the video. For example, in an aspect, computing device 500, one or more processors 505, one or more memories 510, relative vector distance component 515, and/or capturing component 550 may be configured to or may comprise means for capturing a video of a scene, wherein each of the one or more images comprises a frame of the video.

For example, the capturing at block 902 may include using images or frames generated by one or more cameras to generate image vectors. A relative vector distance process may be used to classify the images or frames by comparing distances between each image vector and multiple text vectors representing classes of an object category or action category.

Further, for example, the capturing at block 902 may be performed in order to classify images generated by cameras. For example, one or more surveillance cameras may capture scenes that are transformed into image data. A user may wish to configure a client device or remote server to perform a relative vector distance analysis on the image data to determine if a particular action or object is detected in the image data. If the system determines that the particular action is occurring in the image data, it may trigger an alert, alarm or other notification in response to the action.

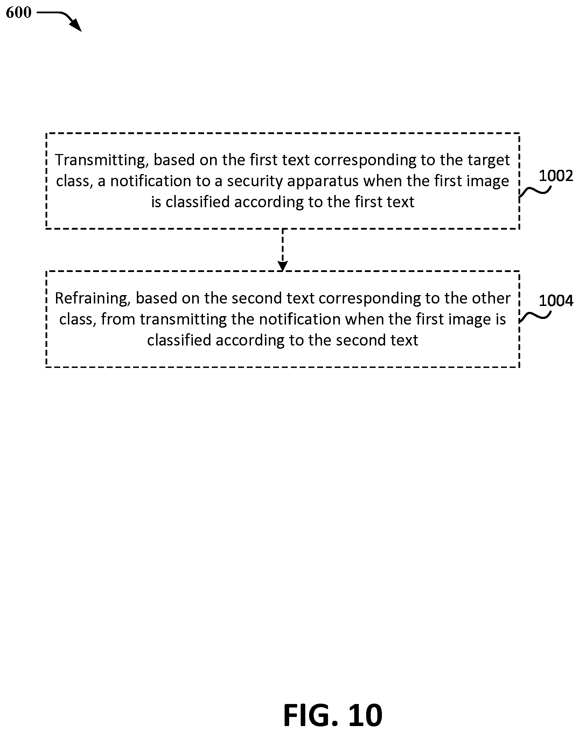

Referring to FIG. 10, in an alternative or additional aspect, at block 1002, the method 600 may further include transmitting, based on the first text corresponding to the target class, a notification to a security apparatus when the first image is classified according to the first text. For example, in an aspect, computing device 500, one or more processors 505, one or more memories 510, relative vector distance component 515, and/or transmitting component 555 may be configured to or may comprise means for transmitting, based on the second text corresponding to the other class, a notification to a security apparatus when the first image is classified according to the first text.

For example, the transmitting at block 1002 may include transmitting data configured to cause another device to perform an alarm or notification function. For example, the if the system classifies one or more image data as depicting an action such as "person falling," then the system (e.g., one or more of the client device and/or the remote server) may transmit signaling to an external device (e.g., external device 118 of FIG. 1) to notify an authority or other responsible personnel.

Further, for example, the transmitting at block 1002 may be performed to provide real time notifications for situations that might be an emergency. Such notifications may trigger a real time response to the detected action.

In this optional aspect, at block 1004, the method 600 may further include refraining, based on the second text corresponding to the other class, from transmitting the notification when the first image is classified according to the second text. For example, in an aspect, computing device 500, one or more processors 505, one or more memories 510, relative vector distance component 515, and/or refraining component 560 may be configured to or may comprise means for refraining, based on the second text corresponding to the other class, from transmitting the notification when the first image is classified according to the second text.

For example, the refraining at block 1004 may include determining whether the classification of the image data is something that should trigger an alert or something that can be ignored. For example, action classifications of "person falling" and/or "person sprinting" may trigger an alert, whereas action classifications of "person walking" or "person sitting" may not trigger any alert.

Further, for example, the refraining at block 1004 may be performed to distinguish between emergency situations and non-emergency situations. Such distinction prevents the system from triggering an alert at every detected action, instead only triggering alerts for certain actions that are likely to represent an emergency situation.

In an alternative or additional aspect, the first text corresponds to a target class, and wherein the second text corresponds to another class outside of the target class. Thus, in some examples, if the relative vector distance component 515 determines that an image data may be classified as a target class, the computing device 500 may transmit a notification to a security apparatus based on the image data being classified according to a target class. If the image data is determined not to be classified as the target class, the computing device 500 may refrain from transmitting the notification.

In one example use case, for instance, an aspect of the present disclosure can be applied in a data center environment to enhance security and operational monitoring. For example, an owner or operator of a data center may deploy cameras throughout the facility to monitor sensitive areas such as server rooms, entry points, and equipment storage zones. Using the system described in the present disclosure, these cameras capture images or video frames, which are then processed to generate image vectors representing the visual features of each scene. The system compares these image vectors to multiple text vectors corresponding to different classes of interest, such as "forced entry," "tailgating," "fire," "equipment tampering," or "normal operation."

If the system detects an image that is most similar to the text vector for "forced entry" or "equipment tampering," it can immediately classify the event accordingly and trigger a real-time alert to security personnel or the data center operator. This enables rapid response to potential security breaches or operational hazards. The use of relative vector distance ensures that the system can accurately distinguish between similar-looking events (such as authorized versus unauthorized access) without requiring extensive manual annotation of training data or costly model fine-tuning. Additionally, the system can be configured to ignore routine activities, such as "maintenance staff working," thereby reducing false alarms and allowing personnel to focus on genuine threats or incidents.

This approach provides the data center owner or operator with a highly accurate, efficient, and scalable solution for monitoring critical infrastructure, ensuring compliance with security protocols, and maintaining operational integrity, all while minimizing the resources required for system setup and ongoing maintenance.

It should be understood that aspects of the present disclosure may be utilized in many other use case scenarios associated with monitoring any indoor and/or outdoor area.

### Additional Considerations

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

### Example Aspects

The following examples are illustrative only and may be combined with aspects of other embodiments or teachings described herein, without limitation.

Example 1 is a method of object recognition using text-based classification model, comprising: receiving one or more images from one or more image sensors, wherein the one or more images comprises a first image; generating an image vector configured to represent one or more features of the first image; computing a vector distance between the image vector and each of a first text vector and a second text vector, wherein the first text vector is configured to represent a first text, and wherein the second text vector is configured to represent a second text; and classifying the first image according to the first text or the second text based on which computed vector distance indicates a highest similarity between the image vector and either the first text vector or the second text vector relative to the other of the first text vector or the second text vector.

Example 2 is the method of Example 1, wherein generating the image vector comprises generating via a neural network configured as at least one of a video encoder or an image encoder.

Example 3 is the method of any of Examples 1 and 2, wherein the image vector is a multi-dimensional vector configured to represent features of the first image.

Example 4 is the method of any of Examples 1-3, wherein the first text is associated with a first action of a first action category, and wherein the second text is associated with a second action of the first action category.

Example 5 is the method of Example 4, wherein each of the first text and the second text correspond to a class of action within the first action category.

Example 6 is the method of any of examples 1-5, wherein the first text is associated with a first action of a first action category, and wherein the second text is synonymous with the first text and associated with the first action of the first action category.

Example 7 is the method of any of Examples 1-6, further comprising: comparing a first vector distance computed between the image vector and the first text vector with a second vector distance computed between the image vector and the second text vector; and determining which one of the first vector distance or the second vector distance indicates the highest similarity relative to the other of the first vector distance or the second vector distance.

Example 8 is the method of any of Examples 1-7, wherein each of the image vector, the first text vector, and the second text vector comprise respective multi-dimensional coordinates in a hyperplane.

Example 9 is the method of any of Examples 1-8, further comprising: capturing a video of a scene, wherein each of the one or more images comprises a frame of the video.

Example 10 is the method of any of Examples 1-9, wherein the first text corresponds to a target class, and wherein the second text corresponds to another class outside of the target class.

Example 11 is the method of Example 10, further comprising: transmitting, based on the first text corresponding to the target class, a notification to a security apparatus when the first image is classified according to the first text; and refraining, based on the second text corresponding to the other class, from transmitting the notification when the first image is classified according to the second text.

Example 12 is an apparatus, comprising: one or more memories, individually or in combination, having instructions; and one or more processors, individually or in combination, configured to execute the instructions and cause the apparatus to perform the method of any of Examples 1-11.

Example 13 is an apparatus, comprising: one or more means for performing the method of any of Examples 1-11.

Example 14 is a non-transitory, computer-readable medium comprising computer executable code, the code when executed by one or more processors causes the one or more processors to, individually or in combination, perform the method of any of Examples 1-11 for object recognition using a text-based classification model.

## Claims

1. An apparatus, in particular for video surveillance of an area within or outside of a building or for indoor or outdoor video surveillance, comprising:
one or more memories, individually or in combination, having instructions; and
one or more processors, individually or in combination, configured to execute the instructions and cause the apparatus to:
receive one or more images from one or more image sensors, wherein the one or more images comprises a first image;
generate an image vector configured to represent one or more features of the first image;
compute a vector distance between the image vector and each of a first text vector and a second text vector, wherein the first text vector is configured to represent a first text, and wherein the second text vector is configured to represent a second text; and
classify the first image according to the first text or the second text based on which computed vector distance indicates a highest similarity between the image vector and the first text vector or the second text vector relative to the other of the first text vector or the second text vector.

2. The apparatus of claim 1, wherein the image vector is generated via a neural network configured as a video encoder or an image encoder and/or wherein the image vector is a multi-dimensional vector configured to represent features of the first image.

3. The apparatus of claim 1 or 2, wherein the first text is associated with a first action of a first action category, and wherein the second text is associated with a second action of the first action category, wherein preferably each of the first text and the second text correspond to a class of action within the first action category.

4. The apparatus of any of the preceding claims, wherein the first text is associated with a first action of a first action category, and wherein the second text is synonymous with the first text and associated with the first action of the first action category.

5. The apparatus of any of the preceding claims, wherein the one or more processors, individually or in combination, are further configured to cause the apparatus to:
compare a first vector distance computed between the image vector and the first text vector with a second vector distance computed between the image vector and the second text vector; and
determine which one of the first vector distance or the second vector distance indicates the highest similarity relative to the other.

6. The apparatus of any of the preceding claims, wherein each of the image vector, the first text vector, and the second text vector comprise respective multi-dimensional coordinates in a hyperplane.

7. The apparatus of any of the preceding claims, further comprising an image sensor configured to capture a video of a scene, wherein each of the one or more images comprises a frame of the video.

8. The apparatus of any of the preceding claims, wherein the first text corresponds to a target class, and wherein the second text corresponds to another class outside of the target class.

9. The apparatus of claim 8, wherein the one or more processors, individually or in combination, are further configured to cause the apparatus to:
transmit, based on the first text corresponding to the target class, a notification to a security apparatus when the first image is classified according to the first text; and
refrain, based on the second text corresponding to the other class, from transmitting the notification when the first image is classified according to the second text.

10. A method of object recognition using text-based classification model, in particular for video surveillance of an area within or outside of a building or for indoor or outdoor video surveillance, comprising:
receiving one or more images from one or more image sensors, wherein the one or more images comprises a first image;
generating an image vector configured to represent one or more features of the first image;
computing a vector distance between the image vector and each of a first text vector and a second text vector, wherein the first text vector is configured to represent a first text, and wherein the second text vector is configured to represent a second text; and
classifying the first image according to the first text or the second text based on which computed vector distance indicates a highest similarity between the image vector and either the first text vector or the second text vector relative to the other of the first text vector or the second text vector.

11. The method of claim 10, wherein generating the image vector comprises generating via a neural network configured as at least one of a video encoder or an image encoder and/or wherein the image vector is a multi-dimensional vector configured to represent features of the first image.

12. The method of claim 10 or 11, wherein the first text is associated with a first action of a first action category, and wherein the second text is associated with a second action of the first action category, wherein preferably each of the first text and the second text correspond to a class of action within the first action category.

13. The method of any of claims 10 to 12, wherein the first text is associated with a first action of a first action category, and wherein the second text is synonymous with the first text and associated with the first action of the first action category.

14. The method of any of claims 10 to 13, further comprising:
comparing a first vector distance computed between the image vector and the first text vector with a second vector distance computed between the image vector and the second text vector; and
determining which one of the first vector distance or the second vector distance indicates the highest similarity relative to the other of the first vector distance or the second vector distance.

15. The method of any of claims 10 to 14, wherein the first text corresponds to a target class, and wherein the second text corresponds to another class outside of the target class, the method preferably further comprising:
transmitting, based on the first text corresponding to the target class, a notification to a security apparatus when the first image is classified according to the first text; and
refraining, based on the second text corresponding to the other class, from transmitting the notification when the first image is classified according to the second text.
